# FASCICULE DE BREVET EUROPEEN

(11) **EP 0 558 406 B1**
(45) Date de publication et mention de la délivrance du brevet: **03.01.1996**
(21) Numéro de dépôt: 93400471.4
(22) Date de dépôt: 24.02.1993
(51) Int. Cl.: F16D 66/02

(54) **Dispositif de détection d'usure de garnitures de friction**
Verschleissanzeiger für Bremsbeläge
Brake lining wear indicator

(30) Priorité: 28.02.1992 FR 9202377
(43) Date de publication de la demande: 01.09.1993
(73) Titulaire: COMPAGNIE PLASTIC OMNIUM, F-69003 Lyon (FR)
(72) Inventeur: Schosseler, René, F-95100 Argenteuil (FR); Bartocci, Marcel, F-52200 Langres (FR)
(74) Mandataire: Leszczynski, André

(56) Documents cités:
- EP-A- 0 227 538
- EP-A- 0 510 737
- FR-A- 2 138 897
- GB-A- 2 231 928

## Description

La présente invention a pour objet un dispositif de détection d'usure de garnitures de friction.

Des documents FR-A-2 183 379 et FR-A-2 591 393, on connait un dispositif de détection d'usure de garnitures de friction, notamment de garnitures de plaquettes de freins, en particulier de freins à disques, comportant un manchon en matériau isolant traversant une plaque-support et présentant une paroi de fond, un conducteur électrique sous forme de fil dénudé, rétreint ou coupé droit, à son extrémité, étant introduit dans le manchon.

Dans ces dispositifs connus, le manchon est maintenu sur la plaque, soit par encliquetage du manchon solidaire du fil, soit par encliquetage du manchon seul puis sertissage du conducteur électrique sur le manchon, ou encore par sertissage du manchon solidaire du conducteur électrique sur la plaque, par déformation radiale et/ou axiale de celle-ci.

Ce dispositif connu présente l'inconvénient que le manchon, qui est une pièce de révolution, encliquetée axialement dans un orifice prévu dans la plaque-support, peut tourner, ce qui peut entraîner une détérioration du câble électrique par vrillage.

De plus, l'encliquetage axial du manchon limite la taille de l'épaulement sur lequel il repose après encliquetage, du fait que ce dernier doit d'abord traverser l'orifice de la plaque-support avant de reprendre sa forme d'épaulement par retour élastique.

Il en résulte un maintien du manchon sur la plaque-support qui peut s'avérer insuffisant en cas de manipulations brutales du dispositif.

En outre, la mise en place d'un tel dispositif sur une plaque-support nécessite deux opérations de manutention, à savoir le positionnement du manchon puis son sertissage.

Il est en outre connu du document FR-A-2 138 897 de monter le manchon par encliquetage latéral dans une encoche latérale de la plaque-support. Un tel montage n'assure pas un blocage en rotation satisfaisant du manchon par rapport à la plaque-support.

La présente invention propose un dispositif de détection d'usure évitant les inconvénients mentionnés ci-dessus et dont la mise en place sur une plaque-support se réduit à une seule opération d'encliquetage, le manchon étant en outre maintenu en rotation une fois encliqueté dans la plaque-support.

La présente invention a pour objet un dispositif de détection d'usure de garnitures de friction, notamment de garnitures de plaquettes de freins, comportant une plaque-support recevant une garniture de friction, un manchon en matériau isolant destiné à être encliqueté sur cette plaque-support et présentant une paroi de fond, et un fil conducteur électrique introduit dans le manchon, avec son extrémité dénudée au voisinage de la paroi de fond du manchon, la plaque-support comportant une encoche latérale destinée à recevoir le manchon par encliquetage latéral, caractérisé par le fait que la partie médiane du manchon emprisonnée dans l'épaisseur de la plaque-support après encliquetage comporte au moins un méplat qui constitue une surface d'appui contre un bord latéral intérieur de l'encoche et s'oppose à la rotation du manchon.

On comprend que, selon l'invention, les deux inconvénients majeurs mentionnés ci-dessus sont résolus, puisque la mise en place du manchon se fait par une seule opération d'encliquetage latéral sans aucune opération de sertissage, et que la rotation du manchon dans son logement est interdite grâce à la présence d'un méplat dans sa partie médiane.

Selon l'invention, le manchon peut être solidarisé au fil conducteur électrique par collage, au moyen d'une résine époxy telle qu'une colle de type "araldite" par exemple, ou par une colle cyanocrylate.

Dans une variante, le manchon peut être directement surmoulé par injection ou par compression à l'extrémité du fil conducteur électrique gainé, évitant ainsi une opération supplémentaire de collage.

De préférence, le manchon est obtenu par moulage d'un matériau électriquement isolant et élastiquement déformable, comme par exemple une résine fluorée telle que le PTFE (polytétrafluoroéthylène).

Dans le but de mieux faire comprendre l'invention on va en décrire maintenant un mode de réalisation donné à titre d'exemple et sans aucun caractère limitatif en référence au dessin schématique annexé dans lequel :
- la figure 1 est une vue en perspective d'une plaquette de frein, apte à être équipée du dispositif selon l'invention.
- la figure 2 représente une vue en coupe suivant II-II de la plaquette de la figure 1 sur laquelle un dispositif selon un mode de réalisation de l'invention a été mis en place, et
- la figure 3 représente une vue en coupe selon III-III de la figure 2.

Sur le dessin, une plaque-support 1 comporte une garniture de friction 2.

Selon l'invention, une encoche latérale 3 est réalisée sur la plaque-support 1 à proximité de la garniture 2, cette encoche présente une section intérieure sensiblement circulaire, ouverte sur une paroi latérale de la plaque-support 1.

Le dispositif selon l'invention comporte un fil conducteur électrique gainé 4, terminé par un embout 5 qui présente une paroi de fond 6 l'embout 5 est encliqueté latéralement dans l'encoche 3 de la plaque-support 1.

Le fil conducteur électrique 4 comporte une âme conductrice 7 et une gaine isolante 8.

Le manchon 5 comporte une partie médiane 9 destinée à être emprisonnée dans l'épaisseur de la plaque-support 1 après encliquetage dans l'encoche 3. Deux épaulements 10 et 11 sont situés de part et d'autre de cette partie médiane 9 pour prévenir tout déplacement axial du manchon 5.

Du fait que l'encliquetage du manchon 5 sur la plaque-support 1 est effectué latéralement, la taille de ces épaulements 10,11 peut être avantageusement assez importante pour maintenir le manchon 5 sur la plaque 1 avec son axe orthogonal à celle-ci.

La solidarisation du manchon 5 sur le fil gainé 4 est obtenue dans le mode de réalisation décrit par surmoulage par injection ou par compression du manchon 5 sur le fil conducteur électrique gainé 4.

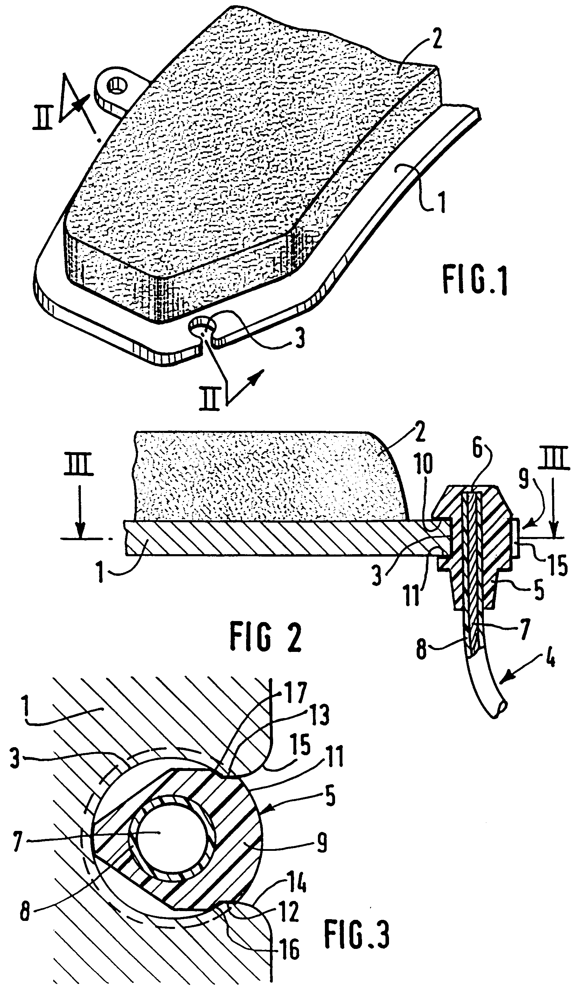

On voit plus clairement sur la figure 3 la forme de la section de la partie médiane 9 du manchon 5.

Sur cette figure, des méplats 12 et 13 du manchon 5 s'appuient selon l'invention sur des bords latéraux intérieurs 14 et 15 de l'encoche 3.

Ces méplats 12 et 13 constituent deux surfaces d'appui qui s'opposent à la rotation du manchon 5 suivant l'axe de l'encoche, et permettent de préserver le fil 4 d'une éventuelle détérioration par vrillage.

La partie médiane 9 comporte également deux surfaces anti-retrait 16 et 17 qui prolongent les méplats 12 et 13.

A l'intérieur de l'encoche 3, la partie médiane 9 présente une section sensiblement triangulaire qui permet un encliquetage latéral aisé du manchon 9 dans l'encoche 3.

Ainsi que décrit ici, il est clair que l'encliquetage latéral du manchon est une opération unique et suffisante pour maintenir ce dernier en position sans qu'il soit nécessaire d'ajouter de pièce supplémentaire.

## Revendications

1. Dispositif de détection d'usure de garnitures de friction, notamment de garnitures de plaquettes de freins, comportant une plaque-support (1) recevant une garniture de friction (2), un manchon (5) en matériau isolant destiné à être encliqueté sur cette plaque-support (1) et présentant une paroi de fond (6), et un fil conducteur électrique (4) introduit dans le manchon (5), avec son extrémité dénudée, rétreinte ou coupée droite au voisinage de la paroi de fond (6) du manchon (5), la plaque-support (1) comportant une encoche latérale (3) destinée à recevoir le manchon (5) par encliquetage latéral, caractérisé par le fait que la partie médiane (9) du manchon (5), emprisonnée dans l'épaisseur de la plaque-support (1) après encliquetage, comporte au moins un méplat (12,13) qui constitue une surface d'appui contre un bord latéral intérieur (14, 15) de l'encoche (3) et s'oppose à la rotation du manchon (5).

2. Dispositif selon la revendication 1, caractérisé par le fait que
l'encoche latérale (3) réalisée sur la plaque-support (1) présente une section intérieure sensiblement circulaire ouverte .

3. Dispositif selon la revendication 2, caractérisé par le fait que la partie médiane (9) du manchon (5) qui se situe dans l'épaisseur de la plaque-support (1) après encliquetage comporte deux méplats (12,13) destinés às'appuyer chacun sur un bord (15,16) de l'encoche (3).

4. Dispositif selon l'une quelconque des revendications précédentes, caractérisé par le fait que le manchon comporte de part et d'autre de sa partie médiane (9) deux épaulements (10,11) de taille suffisante pour le maintenir sur la plaque-support (1) avec son axe orthogonal à celle-ci.

## Patentansprüche

1. Verschleißanzeiger für Reibbeläge, insbesondere für Bremsbeläge, mit einem Belagträger (1), der einen Reibbelag (2) aufnimmt, einer Hülse (5) aus isolierendem Material, die dazu bestimmt ist, an dem Belagträger (1) eingerastet zu werden, und eine Bodenwand (6) aufweist, und einer elektrisch leitenden Ader (4), die in die Hülse (5) eingesteckt ist, mit ihrem abisolierten, eingeschnürten oder in der Nachbarschaft zu der Bodenwand (6) der Hülse (5) stumpf abgeschnittenen Ende, wobei der Belagträger (1) eine seitliche Kerbe (3) aufweist, die dazu bestimmt ist, die Hülse (5) durch seitliche Einrastung aufzunehmen, dadurch gekennzeichnet, daß der mittlere Teil (9) der Hülse (5), der nach dem Einrasten in der Dicke des Belagträgers (1) eingeschlossen ist, wenigstens eine Abflachung (12, 13) aufweist, die eine Anlagefläche für einen inneren seitlichen Rand (14, 15) der Kerbe (3) bildet und die Drehung der Hülse (5) verhindert.

2. Verschleißanzeiger nach Anspruch 1, dadurch gekennzeichnet, daß die in dem Belagträger (1) ausgebildete seitliche Kerbe (3) einen offenen, im wesentlichen kreisförmigen Innenquerschnitt aufweist.

3. Verschleißanzeiger nach Anspruch 2, dadurch gekennzeichnet, daß der mittlere Teil (9) der Hülse (5), der sich nach dem Einrasten innerhalb der Dicke des Belagträgers (1) befindet, zwei Abflachungen (12, 13) aufweist, die dazu bestimmt sind, sich jeweils an einen Rand (15, 16) der Kerbe (3) anzulegen.

4. Verschleißanzeiger nach einem der vorstehenden Ansprüche, dadurch gekennzeichnet, daß die Hülse beiderseits ihres mittleren Teils (9) zwei Schultern (10, 11) von hinreichender Größe aufweist, um sie an dem Belagträger (1) mit ihrer Achse senkrecht zu diesem zu halten.

## Claims

1. Device for detecting the wear of friction linings, especially friction linings for brake pads, including a backing plate (1) receiving a friction lining (2), a bush (5) made of insulating material to be snap-fastened onto this backing plate (1) and having a bottom wall (6), and an electrical conductor wire (4) inserted into the bush (5) with its stripped, thinned-down or cut-square and near the bottom wall (6) of the bush (5), the backing plate (1) including a lateral notch (3) intended to receive the bush (5) by lateral snap-fastening, characterized by the fact that the central part (9) of the bush (5), held captive in the thickness of the backing plate (1) after snap-fastening, includes at least one flat (12,13) which forms a surface for bearing against an internal lateral edge (14, 15) of the notch (3) and prevents rotation of the bush (5).

2. Device according to claim 1, characterized by the fact that the lateral notch (3) made on the backing plate (1) has an open substantially circular internal cross-section.

3. Device according to claim 2, characterized by the fact that the central part (9) of the bush (5), which is located in the thickness of the backing plate (1) after snap-fastening, includes two flats (12,13) which are intended to bear each on one edge (15, 16) of the notch (3) .

4. Device according to any one of the preceding claims, characterized by the fact that the bush includes, on either side of its central part (9), two shoulders (10, 11) of size sufficient to hold it on the backing plate (1) with its axis orthogonal to the latter.
